# EUROPEAN PATENT SPECIFICATION

(11) **EP 4 467 338 B1**
(45) Date of publication and mention of the grant of the patent: **03.12.2025**
(21) Application number: 22955548.7
(22) Date of filing: 15.11.2022
(51) Int. Cl.: A24D 1/02, B32B 3/30, B32B 29/00, B32B 29/06, A24D 1/12, A24C 5/00

(54) **MULTI-LAYER COMPOSITE CIGARETTE PAPER STRUCTURE HAVING GOOD ASH-WRAPPING PERFORMANCE, AND MANUFACTURING METHOD**
MEHRSCHICHTIGE ZIGARETTENPAPIERVERBUNDSTRUKTUR MIT GUTER ASCHEEINHÜLLUNGSLEISTUNG UND HERSTELLUNGSVERFAHREN
STRUCTURE DE PAPIER À CIGARETTE COMPOSITE MULTICOUCHE AYANT DE BONNES PERFORMANCES D'EMBALLAGE DE CENDRES ET PROCÉDÉ DE FABRICATION

(30) Priority: 18.08.2022 CN 202210992958; 18.08.2022 CN 202222177406 U
(43) Date of publication of application: 27.11.2024
(73) Proprietor: China Tobacco Yunnan Industrial Co., Ltd, Kunming City, Yunnan 650233 (CN)
(72) Inventor: YUE, Baoshan, Kunming, Yunnan 650233 (CN); ZHAN, Jianbo, Kunming, Yunnan 650233 (CN); XIE, Jiao, Kunming, Yunnan 650233 (CN); WANG, Tao, Kunming, Yunnan 650233 (CN); ZHENG, Han, Kunming, Yunnan 650233 (CN); WANG, Xu, Kunming, Yunnan 650233 (CN); YU, Tingting, Kunming, Yunnan 650233 (CN); YU, Jiang, Kunming, Yunnan 650233 (CN); GUI, Yongfa, Kunming, Yunnan 650233 (CN); DING, Wei, Kunming, Yunnan 650233 (CN); ZHANG, Jing, Kunming, Yunnan 650233 (CN)
(74) Representative: Garavelli, Paolo
(86) International application number: PCT/CN2022/131821
(87) International publication number: WO 2024/036778

(56) References cited:
- CN-A- 102 094 354
- CN-A- 102 094 354
- CN-A- 105 113 338
- CN-A- 105 113 338
- CN-A- 115 162 055
- CN-A- 115 214 216
- CN-U- 210 104 450
- US-A- 4 984 589
- US-A1- 2003 037 792
- US-A1- 2004 099 280

## Description

### TECHNICAL FIELD

The present disclosure relates to the technical field of cigarette manufacturing, in particular to a multi-layer composite cigarette paper structure having good ash-wrapping performance and a manufacturing method.

### BACKGROUND ART

Cigarette paper is special paper used to wrap tobacco shreds into cigarettes. Although the cigarette paper takes up a small proportion of the weight of the cigarettes, the influence on cigarette products is more significant than that on other tobacco materials. Firstly, the cigarette paper should have certain physical properties to meet the requirements of rolling, connecting and wrapping production; secondly, the cigarette paper wraps the tobacco shreds, together with the tobacco shreds, participates in the process of burning and smoking, to jointly form the taste style of the cigarettes; and thirdly, the cigarette paper has an important effect on smoldering, burning speed, and the release amount of mainstream smoke and side-stream smoke of the cigarettes. Thus, the selection of components and natural permeability of the cigarette paper plays an increasingly important role in cigarette design. The cigarette paper may be divided into ordinary cigarette paper and fast burning cigarette paper according to burning performance; it may be divided into transverse threads, vertical threads and non-threads according to a threaded manner; it may be divided into wood pulp, hemp pulp and mixed pulp according to raw material components; and it may be divided into ordinary cigarette paper and high-permeability cigarette paper according to the permeability.

Burning status of the cigarette paper generally includes an ash-wrapping effect and an ash color, good cigarette paper has a good ash-wrapping effect, cigarettes stand upright after burning, ash does not flake off, and ash is as white as snow after burning; and the smoldering rate of the cigarettes is closely related to the permeability, such that the higher the burning speed of the cigarettes, the higher the requirements for the ash-wrapping effect of the cigarettes, for the reason that the higher burning speed will lead to obvious "ash flaking-off" and "combustion coal fallout" of the cigarettes. Thus, there are more and more optimizations on the ash-wrapping performance of the cigarette paper, for example, the Chinese patent invention patent CN108914676A relates to a preparation method of compact ash-wrapping cigarette paper, and belongs to the technical field of papermaking. A whisker material used in the present disclosure is long in crystal structure, can bear a certain high temperature, and exerts a framework supporting effect in cigarette paper ash, so that the air-flow impact resistance of the cigarette paper ash is effectively improved. The biological durability of the material is low, so that the material is very easy to degrade in a human body, and the use safety is relatively good. Phosphorus anhydride forms a molten object which is similar to glass during pyrolysis and covers a surface, and a good ash-wrapping effect is achieved. The connecting effect among whisker materials with a fibrous or needle-like structure is enhanced, so that the whisker material does not loose easily, and the ash-wrapping performance of the cigarette paper is improved integrally. Calcium carbonate whiskers are mainly used for improving the appearance of the cigarette paper and improving the permeability, the smoldering performance and the like of the cigarette paper. In addition, the opacity and the whiteness of the cigarette paper can also be improved, and the hand feeling and the flexibility are improved.

Further relevant prior art is disclosed in US 4 984 589 A and US 2003/037 792 A1.

### SUMMARY

### TECHNICAL PROBLEM

However, the above cigarette paper structure still has the following problems: during processing of many different types of cigarette paper, paper-based materials are basically the same or similar, the difference only lies in the density and amount of wrapped ash added to the cigarette paper, there are more and more types of cigarette paper, and during switching for processing among different types of cigarette paper, equipment has to be thoroughly cleaned to prevent mutual contamination, leading to an increase in manpower and material costs during processing.

Therefore, in order to solve the above problems, it is necessary for us to design a reasonable and efficient multi-layer composite cigarette paper structure having good ash-wrapping performance.

### TECHNICAL SOLUTION

The present disclosure aims to provide a multi-layer composite cigarette paper structure having good ash-wrapping performance. According to the present disclosure, arrangement is simple, cigarette paper is of a multi-layer structure, and the multi-layer cigarette paper is firstly grouped and processed, and then is wrapped layer by layer; and in a grouping processing manner, basic paper is the same and sandwiched ash-wrapping layers are different, such that the present disclosure can be suitable for smoking, burning, and ash wrapping of cigarettes of different specifications and different tobacco shred types, and separate processing is not needed, and thus the processing waste of paper is reduced, and the experience of a smoker is improved.

In order to fulfill the above objective, the present disclosure provides the following technical solution:

A multi-layer composite cigarette paper structure having good ash-wrapping performance, includes inner-layer cigarette paper provided at an outer side of tobacco shreds and outer-layer cigarette paper provided at an outer side of the inner-layer cigarette paper, an ash-wrapping layer is provided between the inner-layer cigarette paper and the outer-layer cigarette paper, functional grooves are formed in a side of the inner-layer cigarette paper distant from the tobacco shreds, and a friction surface is provided at a side of the ash-wrapping layer close to the inner-layer cigarette paper, such that the inner-layer cigarette paper, the ash-wrapping paper, and the outer-layer cigarette paper are grouped and processed during processing; and during cigarette manufacturing, the inner-layer cigarette paper wraps the outer side of the tobacco shreds and the functional grooves are located in the side distant from the tobacco shreds, and the friction surface of the ash-wrapping layer is made to face the functional grooves of the inner-layer cigarette paper when the outer-layer cigarette paper wraps the outer side of the inner-layer cigarette paper.

As a preference of the present disclosure, decorative holes are formed in the outer-layer cigarette paper.

As a preference of the present disclosure, at least one functional groove and at least one decorative hole are provided.

As a preference of the present disclosure, a first flavoring layer is provided at a side of the inner-layer cigarette paper close to the tobacco shreds, and a second flavoring layer is provided at a side of the outer-layer cigarette paper close to the inner-layer cigarette paper.

As a preference of the present disclosure, the first flavoring layer and the second flavoring layer are both at least one of flavoring slices, flavoring lines and flavoring paper.

As a preference of the present disclosure, the ash-wrapping layer is a framework supporting member.

As a preference of the present disclosure, a depth of the functional grooves is less than a thickness of the inner-layer cigarette paper.

As a preference of the present disclosure, each of the functional grooves includes a first functional groove communicated with the corresponding decorative hole and a second functional groove cooperating with the friction surface.

As a preference of the present disclosure, the inner-layer cigarette paper is a leather paper member.

The present disclosure further provides a manufacturing method for the multi-layer composite cigarette paper structure having good ash-wrapping performance, including the following steps:
S1: acquiring types of tobacco shreds, selecting required inner-layer cigarette paper and outer-layer cigarette paper, and selecting a required ash-wrapping layer;
S2: forming a plurality of functional grooves in one side of the inner-layer cigarette paper;
S3: wrapping an outer side of the tobacco shreds with the inner-layer cigarette paper, such that the side of the inner-layer cigarette paper close to the functional grooves is located at an outer side; and
S4: wrapping the outer side of the inner-layer cigarette paper with the outer-layer cigarette paper, sandwiching the ash-wrapping layer between the inner-layer cigarette paper and the outer-layer cigarette paper, and making a friction surface of the ash-wrapping layer face the functional grooves of the inner-layer cigarette paper.

### BENEFICIAL EFFECTS

The multi-layer composite cigarette paper structure having good ash-wrapping performance and the manufacturing method in the present disclosure have the beneficial effects:
1. Arrangement is simple, a plurality of layers of cigarette paper are respectively processed in a grouping processing manner, and basic paper is the same and sandwiched ash-wrapping layers are different, such that the present disclosure can be suitable for smoking, burning, and ash wrapping of cigarettes of different specifications and different tobacco shred types, and separate processing is not needed, and thus the processing waste of paper is reduced;
2. the plurality of layers of paper are grouped and processed, the inner-layer cigarette paper, and the outer-layer cigarette paper, and the ash-wrapping layer can be respectively processed, so as to improve processing flexibility, which is conducive to subsequent targeted improvement and optimization on the cigarette paper according to functions at different layers, thereby improving the experience of a smoker; and
3. the plurality of layers of paper can be respectively positioned for different functions according to the requirements of development and design.

### BRIEF DESCRIPTION OF THE DRAWINGS

FIG. 1 is a schematic sectional diagram of an embodiment of a multi-layer composite cigarette paper structure having good ash-wrapping performance according to the present disclosure;
FIG. 2 is a schematic diagram illustrating an outer side of inner-layer cigarette paper as it is unrolled in an embodiment of a multi-layer composite cigarette paper structure having good ash-wrapping performance according to the present disclosure;
FIG. 3 is a schematic diagram illustrating an outer side of outer-layer cigarette paper as it is unrolled in an embodiment of a multi-layer composite cigarette paper structure having good ash-wrapping performance according to the present disclosure;
FIG. 4 is a schematic sectional diagram of another embodiment of a multi-layer composite cigarette paper structure having good ash-wrapping performance according to the present disclosure; and
FIG. 5 is a schematic flow diagram of a manufacturing method for a multi-layer composite cigarette paper structure having good ash-wrapping performance according to the present disclosure.

In the drawings: 1. Inner-layer cigarette paper, 11. Functional groove, 12. First flavoring layer, 2. Outer-layer cigarette paper, 21. Decorative hole, 22. Second flavoring layer, 3. Ash-wrapping layer, and 4. Tobacco shred.

### DETAILED DESCRIPTION OF THE EMBODIMENTS

The followings are specific embodiments of the present disclosure, the technical solutions of the present disclosure are further described, but the present disclosure is not limited to these embodiments.

Exemplary embodiments of the present disclosure will be described in detail with reference to the drawings. It should be noted that unless otherwise specified, relative arrangement and steps of modules and steps illustrated in these embodiments do not limit the scope of the present disclosure.

Meanwhile, it should be understood that in order to facilitate description, flows in the drawings are not merely performed alone, but a plurality of steps are performed in a cross-over manner.

In the description of the present disclosure, it should be understood that orientation or position relationships indicated by terms "center", "upper", "lower", "left", "right", "vertical", "horizontal", "inner", "outer", and the like are orientation or position relationships shown in the drawings, or orientation or position relationships based on which products of the present disclosure are usually placed, are adopted not to indicate or imply that indicated devices or elements must be in specific orientations or structured and operated in specific orientations but only to conveniently describe the present disclosure and simplify description, and thus should not be understood as a limitation to the present disclosure. In addition, terms "first", "second", and the like are merely used for distinguishing description and should not be understood as indication or implication of relative importance.

The following description of at least one exemplary embodiment is actually illustrative merely, and never acts as any limitation to the present disclosure or application or use thereof.

Technologies, methods and systems known to those of ordinary skill in the related art may not be discussed in detail, but are to be regarded as a part of the specification where appropriate.

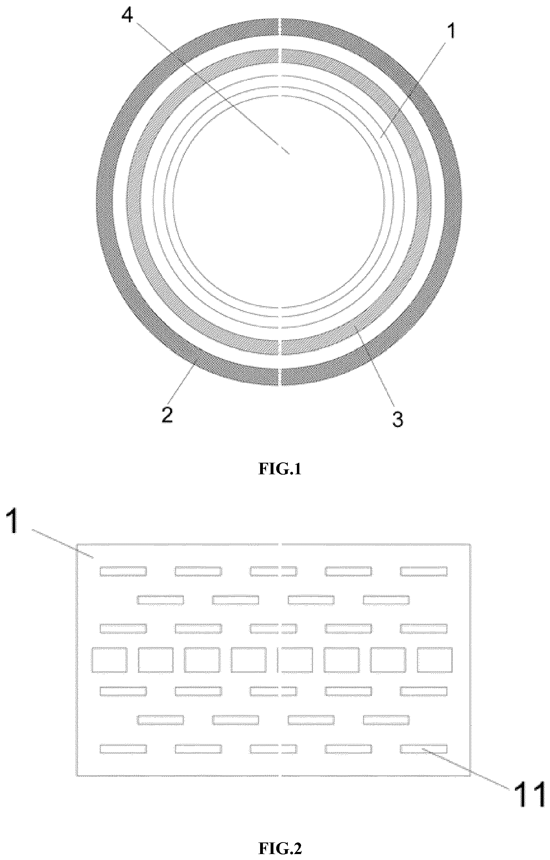

Embodiment 1: As shown in FIGS. 1-3, a multi-layer composite cigarette paper structure having good ash-wrapping performance, includes inner-layer cigarette paper 1 provided at an outer side of tobacco shreds 4 and outer-layer cigarette paper 2 provided at an outer side of the inner-layer cigarette paper 1, an ash-wrapping layer 3 is provided between the inner-layer cigarette paper 1 and the outer-layer cigarette paper 2, functional grooves 11 are formed in a side of the inner-layer cigarette paper 1 distant from the tobacco shreds 4, and a friction surface is provided at a side of the ash-wrapping layer 3 close to the inner-layer cigarette paper 1, such that the inner-layer cigarette paper 1, the ash-wrapping paper 3, and the outer-layer cigarette paper 2 are grouped and processed during processing; and during cigarette manufacturing, the inner-layer cigarette paper 1 wraps the outer side of the tobacco shreds 4 and the functional grooves 11 are located in the side distant from the tobacco shreds 4, and the friction surface of the ash-wrapping layer 3 is made to face the functional grooves 11 of the inner-layer cigarette paper 1 when the outer-layer cigarette paper 2 wraps the outer side of the inner-layer cigarette paper 1.

In the present disclosure, the cigarette paper wrapping the outer side of the tobacco shreds 4 is of a multi-layer structure, that is, the outer-layer cigarette paper 2, the inner-layer cigarette paper 1, and the ash-wrapping layer 3, and the above multi-layer structure is grouped and processed and then sequentially wraps the outer side of the tobacco shreds 4 after being processed to form a cigarette structure.

Firstly, as for a structure of the inner-layer cigarette paper 1, the functional grooves 11 are formed in the side face of the inner-layer cigarette paper 1 distant from the tobacco shreds 4, a depth of the functional grooves 11 is less than a thickness of the inner-layer cigarette paper 1, that is, the functional grooves 11 do not penetrate through the whole inner-layer cigarette paper 1, but only a thickness of inner-layer cigarette paper 1 with the functional grooves 11 is smaller, such that a ventilation rate at the position is increased accordingly, thereby adapting to the smoking experience of a smoker.

Then as for a structure of the outer-layer cigarette paper 2, decorative holes 21 are formed in the outer-layer cigarette paper 2, and the decorative holes 21 directly penetrate through the outer-layer cigarette paper 2, which also have the effect of increasing the ventilation rate.

Generally, at least one functional groove 11 and at least one decorative hole 21 are provided.

Then as for a structure of the ash-wrapping layer 3, the ash-wrapping layer 3 is provided between the inner-layer cigarette paper 1 and the outer-layer cigarette paper 2, and the friction surface is provided at the side of the ash-wrapping layer 3 close to the inner-layer cigarette paper 1. The ash-wrapping layer 3 is a framework supporting member, which is usually a whisker member formed by compounding calcium carbonate and phosphoric anhydride fibers, and aims to cover a surface of cigarette ash with a solid melted object forming supporting during cigarette burning for ash wrapping. The ash-wrapping layer 3 may be planar, reticular or even threadlike, however, if the ash-wrapping layer 3 is planar, the friction surface has to be provided at the side face of the ash-wrapping layer to be used for rubbing with other layers of cigarette paper, facilitating arrangement.

Equivalently, the ash-wrapping layer 3 is sandwiched between the inner-layer cigarette paper 1 and the outer-layer cigarette paper 2, and positioning and mounting are performed through friction, such that the inner-layer cigarette paper and the outer-layer cigarette paper are covered effectively after being burnt to improve the ash-wrapping effect, and the higher stability is achieved during mounting.

In addition, due to the arrangement of the functional grooves 11 and the decorative holes 21, the ventilation rate at the ash-wrapping layer 3 can be effectively adjusted in addition to adjusting the ventilation rate at the tobacco shreds 4, and the smoldering rate of cigarettes is closely related to the permeability. The higher the burning speed of the cigarettes, the higher the requirements for the ash-wrapping effect on the cigarettes, for the reason that the higher burning speed will lead to obvious "ash flaking-off" and "combustion coal fallout" of the cigarettes. Thus, ash-wrapping layers 3 with different thicknesses and different functional grooves 11 and decorative holes 21 can be selected according to different cigarettes, so as to improve the ash-wrapping performance of the ash-wrapping layer 3.

Finally, as for the cooperation among the inner-layer cigarette paper 1, the outer-layer cigarette paper 2, and the ash-wrapping layer 3, the inner-layer cigarette paper 1, the outer-layer cigarette paper 2, and the ash-wrapping layer 3 are grouped and processed during processing and sequentially wrap the outer side of the tobacco shreds 4 during cigarette manufacturing.

Firstly, the inner-layer cigarette paper 1 wraps the outer side of the tobacco shreds 4, so that the side of the inner-layer cigarette paper 1 distant from the functional grooves 11 is located at the inner side; and then the outer-layer cigarette paper 2 wraps the outer side of the inner-layer cigarette paper 1, the ash-wrapping layer 3 is sandwiched between the inner-layer cigarette paper 1 and the outer-layer cigarette paper 2, and meanwhile the friction surface of the ash-wrapping layer 3 is made to face the functional grooves 11 of the inner-layer cigarette paper 1.

In conclusion, a manufacturing method for the multi-layer composite cigarette paper structure having good ash-wrapping performance, includes the following steps: firstly, types of tobacco shreds are acquired, required inner-layer cigarette paper and outer-layer cigarette paper are selected, and a required ash-wrapping layer is selected; then a plurality of functional grooves are formed in one side of the inner-layer cigarette paper; then the inner-layer cigarette paper wraps an outer side of the tobacco shreds, such that the side of the inner-layer cigarette paper close to the functional grooves is located at an outer side; and finally the outer-layer cigarette paper wraps the outer side of the inner-layer cigarette paper, the ash-wrapping layer is sandwiched between the inner-layer cigarette paper and the outer-layer cigarette paper, and a friction surface of the ash-wrapping layer is made to face the functional grooves of the inner-layer cigarette paper.

According to the multi-layer composite cigarette paper structure having good ash-wrapping performance and the manufacturing method, arrangement is simple, the cigarette paper is of a multi-layer structure, and the multi-layer cigarette paper is firstly grouped and processed, and then is wrapped layer by layer; and in a grouping processing manner, basic paper is the same and sandwiched ash-wrapping layers are different, such that the present disclosure can be suitable for smoking, burning, and ash wrapping of cigarettes of different specifications and different tobacco shred types, and separate processing is not needed, and thus the processing waste of paper is reduced, and the experience of the smoker is improved.

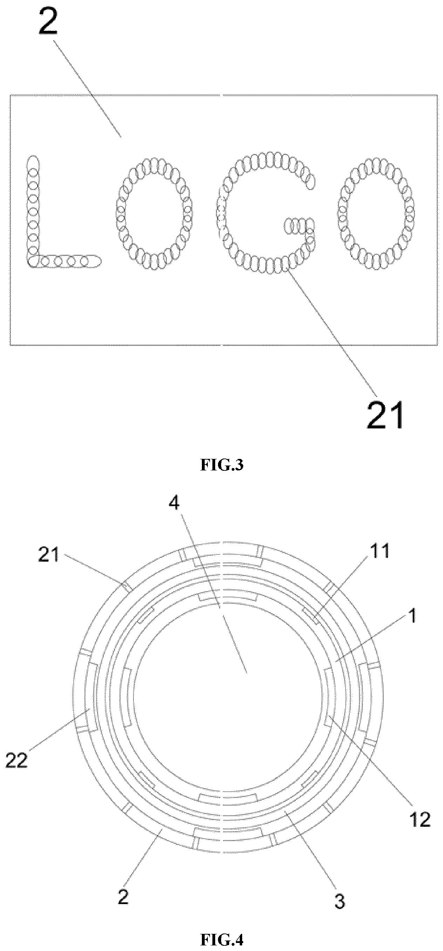

As shown in FIG. 4, Embodiment 2 is only one embodiment of the present disclosure. On the basis of Embodiment 1, in the multi-layer composite cigarette paper structure having good ash-wrapping performance according to the present disclosure, a first flavoring layer 12 is provided at a side of the inner-layer cigarette paper 1 close to the tobacco shreds 4, and a second flavoring layer 22 is provided at a side of the outer-layer cigarette paper 2 close to the inner-layer cigarette paper 1.

That is, cigarette flavors may be provided at the inner-layer cigarette paper 1 and the outer-layer cigarette paper 2, flavors at both positions may be the same or different, that is, the flavors of different types are not in contact at ordinary times, but react mutually during burning to generate a mixed flavor, thereby improving the smoking experience of the smoker.

Of course, the first flavoring layer 12 is to arrange the essence and flavor at the inner side of the inner-layer cigarette paper 1, the first flavoring layer 12 is at least one of flavoring slices, flavoring lines and flavoring paper, the essence and flavor is usually added in a manner such as single-sided coating, double-sided coating, or internal sizing, and thus the essence and flavor is applied to an inner surface of the inner-layer cigarette paper 1, thereby effectively preventing the essence and flavor from being exposed in air.

Usually, the first flavoring layer 12 is provided at the side of the inner-layer cigarette paper 1 distant from the functional grooves 11, that is, the first flavoring layer 12 is provided at the inner side of the inner-layer cigarette paper 1, which is convenient for more conveniently arranging the essence and flavor at the inner side of the inner-layer cigarette paper 1.

Similarly, the second flavoring layer 22 is to arrange the essence and flavor at the inner side of the outer-layer cigarette paper 2, the second flavoring layer 22 is at least one of flavoring slices, flavoring lines or flavoring paper, the essence and flavor is usually added in a manner such as single-sided coating, double-sided coating, or internal sizing, and thus the essence and flavor is applied to an inner surface of the outer-layer cigarette paper 2, thereby effectively preventing the essence and flavor from being exposed in air.

In conclusion, different layers of cigarette paper can be positioned for different functions.

Still as shown in FIGS. 1-4, Embodiment 3 is only one embodiment of the present disclosure. On the basis of any of the above embodiments, in the multi-layer composite cigarette paper structure having good ash-wrapping performance according to the present disclosure, each of the functional grooves 11 includes a first functional groove communicated with the corresponding decorative hole 21 and a second functional groove cooperating with the friction surface, as shown in FIG. 2; and a depth of the first functional groove is not greater than a depth of the second functional groove. Herein, the second functional groove corresponds to the first flavoring layer 12, and the first functional groove is communicated with the decorative hole 21.

It can be said that in order to facilitate the arrangement of the first flavoring layer 12, the second ventilation adjusting groove is often shallower; and in order to ventilate in cooperation with the decorative hole 21, the first ventilation adjusting groove is deeper.

Moreover, the inner-layer cigarette paper 1 is a leather paper member.

Finally, the plurality of decorative holes 21 form a tearable LOGO hole belt, as shown in FIG. 3. The LOGO hole belt may be torn off when necessary, so as to further increase a ventilation rate of the whole cigarette paper. Meanwhile, a bright LOGO symbol may be provided on a surface of the outer-side cigarette paper 2, showing the function of appearance decoration.

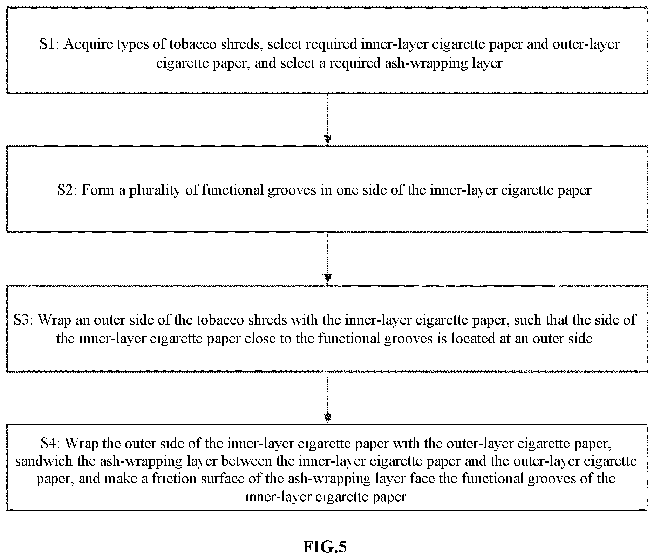

Embodiment 4, as shown in FIG. 5, the present disclosure further provides a manufacturing method for the multi-layer composite cigarette paper structure having good ash-wrapping performance according to any one of all the above embodiments, including the following steps:
S1: types of tobacco shreds are acquired, required inner-layer cigarette paper and outer-layer cigarette paper are selected, and a required ash-wrapping layer is selected;
S2: a plurality of functional grooves are formed in one side of the inner-layer cigarette paper;
S3: the inner-layer cigarette paper wraps an outer side of the tobacco shreds, such that the side of the inner-layer cigarette paper close to the functional grooves is located at an outer side; and
S4: the outer-layer cigarette paper wraps the outer side of the inner-layer cigarette paper, the ash-wrapping layer is sandwiched between the inner-layer cigarette paper and the outer-layer cigarette paper, and a friction surface of the ash-wrapping layer is made to face the functional grooves of the inner-layer cigarette paper.

According to the multi-layer composite cigarette paper structure having good ash-wrapping performance and the manufacturing method, arrangement is simple, the cigarette paper is of a multi-layer structure, and the multi-layer cigarette paper is firstly grouped and processed, and then is wrapped layer by layer; and in a grouping processing manner, basic paper is the same and sandwiched ash-wrapping layers are different, such that the present disclosure can be suitable for smoking, burning, and ash wrapping of cigarettes of different specifications and different tobacco shred types, and separate processing is not needed, and thus the processing waste of paper is reduced, and the experience of the smoker is improved.

## Claims

1. A multi-layer composite cigarette paper structure having good ash-wrapping performance, comprising inner-layer cigarette paper (1) provided at an outer side of tobacco shreds (4) and outer-layer cigarette paper (2) provided at an outer side of the inner-layer cigarette paper (1), wherein an ash-wrapping layer (3) is provided between the inner-layer cigarette paper (1) and the outer-layer cigarette paper (2),
**characterized in that**
functional grooves (11) are formed in a side of the inner-layer cigarette paper (1) distant from the tobacco shreds (4), and a friction surface is provided at a side of the ash-wrapping layer (3) close to the inner-layer cigarette paper (1), such that the inner-layer cigarette paper (1), the ash-wrapping paper (3), and the outer-layer cigarette paper (2) are grouped and processed during processing; and during cigarette manufacturing, firstly, the inner-layer cigarette paper (1) wraps the outer side of the tobacco shreds (4) and the functional grooves (11) are located in the side distant from the tobacco shreds (4), and the friction surface of the ash-wrapping layer (3) is made to face the functional grooves (11) of the inner-layer cigarette paper (1) when the outer-layer cigarette paper (2) wraps the outer side of the inner-layer cigarette paper (1).

2. The multi-layer composite cigarette paper structure having good ash-wrapping performance according to claim 1, **characterized in that** decorative holes (21) are formed in the outer-layer cigarette paper (2).

3. The multi-layer composite cigarette paper structure having good ash-wrapping performance according to claim 2, **characterized in that** at least one functional groove (11) and at least one decorative hole (21) are provided.

4. The multi-layer composite cigarette paper structure having good ash-wrapping performance according to claim 1, **characterized in that** a first flavoring layer (12) is provided at a side of the inner-layer cigarette paper (1) close to the tobacco shreds (4), and a second flavoring layer (22) is provided at a side of the outer-layer cigarette paper (2) close to the inner-layer cigarette paper (1).

5. The multi-layer composite cigarette paper structure having good ash-wrapping performance according to claim 4, **characterized in that** the first flavoring layer (12) and the second flavoring layer (22) are both at least one of flavoring slices, flavoring lines and flavoring paper.

6. The multi-layer composite cigarette paper structure having good ash-wrapping performance according to claim 1, **characterized in that** the ash-wrapping layer (3) is a framework supporting member.

7. The multi-layer composite cigarette paper structure having good ash-wrapping performance according to claim 1, **characterized in that** a depth of the functional grooves (11) is less than a thickness of the inner-layer cigarette paper (1).

8. The multi-layer composite cigarette paper structure having good ash-wrapping performance according to claim 7, **characterized in that** each of the functional grooves (11) comprises a first functional groove communicated with the corresponding decorative hole (21) and a second functional groove cooperating with the friction surface.

9. The multi-layer composite cigarette paper structure having good ash-wrapping performance according to claim 1, **characterized in that** the inner-layer cigarette paper (1) is a leather paper member.

10. A manufacturing method for the multi-layer composite cigarette paper structure having good ash-wrapping performance according to any one of claims 1-9, comprising the following steps:
S1: acquiring types of tobacco shreds, selecting required inner-layer cigarette paper and outer-layer cigarette paper, and selecting a required ash-wrapping layer;
**characterized in**
S2: forming a plurality of functional grooves in one side of the inner-layer cigarette paper;
S3: wrapping an outer side of the tobacco shreds with the inner-layer cigarette paper, such that the side of the inner-layer cigarette paper close to the functional grooves is located at an outer side; and
S4: wrapping the outer side of the inner-layer cigarette paper with the outer-layer cigarette paper, sandwiching the ash-wrapping layer between the inner-layer cigarette paper and the outer-layer cigarette paper, and making a friction surface of the ash-wrapping layer face the functional grooves of the inner-layer cigarette paper.

## Patentansprüche

1. Mehrschichtige, zusammengesetzte Zigarettenpapierstruktur mit guter Ascheumhüllungsleistung, umfassend eine innere Zigarettenpapierschicht (1), die an einer Außenseite von Tabakschnitzeln (4) vorgesehen ist, und eine äußere Zigarettenpapierschicht (2), die an einer Außenseite der inneren Zigarettenpapierschicht (1) vorgesehen ist, wobei zwischen der inneren Zigarettenpapierschicht (1) und der äußeren Zigarettenpapierschicht (2) eine Ascheumhüllungsschicht (3) vorgesehen ist, **dadurch gekennzeichnet, dass** funktionelle Rillen (11) in einer von den Tabakschnitzeln (4) entfernten Seite des inneren Zigarettenpapiers (1) ausgebildet sind und eine Reibungsfläche auf einer Seite der Ascheumhüllungsschicht (3) nahe der inneren Zigarettenpapierschicht (1) vorgesehen ist, so dass die innere Zigarettenpapierschicht (1), das Ascheumhüllungspapier (3) und die äußere Zigarettenpapierschicht (2) während der Verarbeitung gruppiert und verarbeitet werden; und bei der Zigarettenherstellung wird zunächst die innere Zigarettenpapierschicht (1) um die Außenseite der Tabakschnitzel (4) gewickelt, wobei sich die Funktionsrillen (11) auf der den Tabakschnitzeln (4) abgewandten Seite befinden, und die Reibungsfläche der Ascheumhüllungsschicht (3) wird so angebracht, dass sie den Funktionsrillen (11) der inneren Zigarettenpapierschicht (1) zugewandt ist, wenn die äußere Zigarettenpapierschicht (2) die Außenseite der inneren Zigarettenpapierschicht (1) umhüllt.

2. Mehrschichtige, zusammengesetzte Zigarettenpapierstruktur mit guter Ascheumhüllungsleistung gemäß Anspruch 1, **dadurch gekennzeichnet, dass** in der äußeren Zigarettenpapierschicht (2) dekorative Löcher (21) ausgebildet sind.

3. Mehrschichtige, zusammengesetzte Zigarettenpapierstruktur mit guter Ascheumhüllungsleistung nach Anspruch 2, **dadurch gekennzeichnet, dass** mindestens eine Funktionsnut (11) und mindestens ein dekoratives Loch (21) vorgesehen sind.

4. Mehrschichtige, zusammengesetzte Zigarettenpapierstruktur mit guter Ascheumhüllungsleistung gemäß Anspruch 1, **dadurch gekennzeichnet, dass** eine erste Aromaschicht (12) auf einer Seite des inneren Zigarettenpapiers (1) nahe den Tabakschnitzeln (4) vorgesehen ist und eine zweite Aromaschicht (22) auf einer Seite des äußeren Zigarettenpapiers (2) nahe dem inneren Zigarettenpapier (1) vorgesehen ist.

5. Mehrschichtige, zusammengesetzte Zigarettenpapierstruktur mit guter Ascheumhüllungsleistung nach Anspruch 4, **dadurch gekennzeichnet, dass** die erste Aromaschicht (12) und die zweite Aromaschicht (22) beide mindestens eines von Aromascheiben, Aromalinien und Aromapapier sind.

6. Mehrschichtige, zusammengesetzte Zigarettenpapierstruktur mit guter Ascheumhüllungsleistung nach Anspruch 1, **dadurch gekennzeichnet, dass** die Ascheumhüllungsschicht (3) ein Rahmenstützelement ist.

7. Mehrschichtige, zusammengesetzte Zigarettenpapierstruktur mit guter Ascheumhüllungsleistung nach Anspruch 1, **dadurch gekennzeichnet, dass** die Tiefe der Funktionsrillen (11) geringer ist als die Dicke des inneren Zigarettenpapiers (1).

8. Mehrschichtige, zusammengesetzte Zigarettenpapierstruktur mit guter Ascheumhüllungsleistung nach Anspruch 7, **dadurch gekennzeichnet, dass** jede der Funktionsnuten (11) eine erste Funktionsnut umfasst, die mit dem entsprechenden dekorativen Loch (21) in Verbindung steht, und eine zweite Funktionsnut, die mit der Reibungsfläche zusammenwirkt.

9. Mehrschichtige, zusammengesetzte Zigarettenpapierstruktur mit guter Ascheumhüllungsleistung gemäß Anspruch 1, **dadurch gekennzeichnet, dass** das innere Zigarettenpapier (1) ein Lederpapierelement ist.

10. Herstellungsverfahren für die mehrschichtige Zigarettenpapierverbundstruktur mit guter Ascheumhüllungsleistung gemäß einem der Ansprüche 1-9, das die folgenden Schritte umfasst:
S1: Beschaffung von Tabakschnitzelsorten, Auswahl des erforderlichen Zigarettenpapiers für die innere und äußere Schicht und Auswahl einer erforderlichen Ascheumhüllungsschicht;
**dadurch gekennzeichnet**,
S2: Bilden einer Vielzahl von Funktionsrillen in einer Seite des inneren Zigarettenpapiers;
S3: Umwickeln einer Außenseite der Tabakschnitzel mit dem Innenschicht-Zigarettenpapier, so dass die den Funktionsrillen nahe Seite des Innenschicht-Zigarettenpapiers außen liegt; und
S4: Umwickeln der Außenseite des inneren Zigarettenpapiers mit dem äußeren Zigarettenpapier, Einlegen der Ascheumhüllungsschicht zwischen das innere Zigarettenpapier und das äußere Zigarettenpapier und Ausrichten einer Reibungsfläche der Ascheumhüllungsschicht in Richtung der Funktionsrillen des inneren Zigarettenpapiers.

## Revendications

1. Structure de papier à cigarette composite multicouche présentant une bonne performance d'enrobage par les cendres, comprenant une couche de papier à cigarette interne (1) disposée sur une face extérieure de copeaux de tabac (4) et une couche de papier à cigarette externe (2) disposée sur une face extérieure du papier à cigarette interne (1), une couche d'enrobage par les cendres (3) est disposée entre les papiers à cigarette interne (1) et externe (2), la structure est **caractérisée en ce que** des rainures fonctionnelles (11) sont formées sur une face du papier à cigarette interne (1) éloignée des copeaux de tabac (4), et **en ce qu'**une surface de frottement est disposée sur une face de la couche d'enrobage par les cendres (3) proche du papier à cigarette interne (1), de sorte que le papier à cigarette interne (1), le papier d'enrobage par les cendres (3) et le papier à cigarette externe (2) sont regroupés et traités pendant le traitement. et pendant la fabrication des cigarettes, tout d'abord, le papier à cigarette de couche interne (1) enveloppe le côté externe des lambeaux de tabac (4) et les rainures fonctionnelles (11) sont situées sur le côté éloigné des lambeaux de tabac (4), et la surface de frottement de la couche d'enveloppement de cendres (3) est amenée à faire face aux rainures fonctionnelles (11) du papier à cigarette de couche interne (1) lorsque le papier à cigarette de couche externe (2) enveloppe le côté externe du papier à cigarette de couche interne (1).

2. Structure de papier à cigarette composite multicouche présentant une bonne performance d'enveloppement de cendres selon la revendication 1, **caractérisée en ce que** des trous décoratifs (21) sont formés dans la couche extérieure de papier à cigarette (2).

3. Structure de papier à cigarette composite multicouche présentant de bonnes performances d'enveloppement des cendres selon la revendication 2, **caractérisée en ce qu'**au moins une rainure fonctionnelle (11) et au moins un trou décoratif (21) sont prévus.

4. Structure de papier à cigarette composite multicouche présentant une bonne performance d'enveloppement de cendres selon la revendication 1, **caractérisée en ce qu'**une première couche aromatisante (12) est disposée sur un côté du papier à cigarette interne (1) à proximité des copeaux de tabac (4), et une seconde couche aromatisante (22) est disposée sur un côté du papier à cigarette externe (2) à proximité du papier à cigarette interne (1).

5. Structure de papier à cigarette composite multicouche présentant une bonne performance d'enveloppement de cendres selon la revendication 4, **caractérisée en ce que** la première couche aromatisante (12) et la seconde couche aromatisante (22) sont toutes deux au moins l'une parmi des tranches aromatisantes, des lignes aromatisantes et du papier aromatisant.

6. Structure de papier à cigarette composite multicouche présentant de bonnes performances d'enveloppement de cendres selon la revendication 1, **caractérisée en ce que** la couche d'enveloppement de cendres (3) est un élément de support de cadre.

7. Structure de papier à cigarette composite multicouche présentant une bonne performance d'enveloppement des cendres selon la revendication 1, **caractérisée en ce que** la profondeur des rainures fonctionnelles (11) est inférieure à l'épaisseur du papier à cigarette de la couche intérieure (1).

8. Structure de papier à cigarette composite multicouche présentant une bonne performance d'enveloppement des cendres selon la revendication 7, **caractérisée en ce que** chacune des rainures fonctionnelles (11) comprend une première rainure fonctionnelle communiquant avec le trou décoratif correspondant (21) et une seconde rainure fonctionnelle coopérant avec la surface de frottement.

9. Structure de papier à cigarette composite multicouche présentant de bonnes performances d'enveloppement de cendres selon la revendication 1, **caractérisée en ce que** le papier à cigarette de couche intérieure (1) est un élément de papier en cuir.

10. Procédé de fabrication d'une structure composite multicouche de papier à cigarette présentant une bonne performance d'enrobage des cendres selon l'une quelconque des revendications 1 à 9, comprenant les étapes suivantes :
S1 : acquisition des types de copeaux de tabac, sélection du papier à cigarettes de couche intérieure et du papier à cigarettes de couche extérieure requis, et sélection de la couche d'emballage de cendres requise ;
caractérisé en
S2 : former une pluralité de rainures fonctionnelles sur un côté de la couche intérieure du papier à cigarette ;
S3 : envelopper un côté extérieur des lambeaux de tabac avec le papier à cigarette de la couche intérieure, de telle sorte que le côté du papier à cigarette de la couche intérieure proche des rainures fonctionnelles soit situé sur un côté extérieur ; et
S4 : envelopper le côté extérieur du papier à cigarette de la couche intérieure avec le papier à cigarette de la couche extérieure, prendre en sandwich la couche d'emballage de cendres entre le papier à cigarette de la couche intérieure et le papier à cigarette de la couche extérieure, et faire en sorte qu'une surface de friction de la couche d'emballage de cendres soit face aux rainures fonctionnelles du papier à cigarette de la couche intérieure.
